# EUROPEAN PATENT APPLICATION

(11) **EP 3 046 296 A1**
(43) Date of publication of application: **20.07.2016**
(21) Application number: 15305041.4
(22) Date of filing: 16.01.2015
(51) Int. Cl.: H04L 12/801, H04L 12/825, H04L 12/823

(54) **Active queue management**

(71) Applicant: ALCATEL LUCENT, 92100 Boulogne-Billancourt (FR)
(72) Inventor: Tang, Siyu, 2018 Antwerpen (BE); Lou, Zhe, 2018 Antwerpen (BE)
(74) Representative: Philippaerts, Yannick

(57) **Abstract**

Method for triggering a congestion control mechanism of a network element, wherein the method comprises the steps of detecting at an end-user device a traffic change trigger action; retrieving time information and quantum information regarding a near future traffic change from the traffic change trigger action; generating a message comprising at least the time information and the quantum information; sending the message to the network element to trigger the congestion control mechanism.

## Description

### Technical Field

The present invention relates to a method for triggering an active queue management system of a network element. The invention further relates to a module for triggering an active queue management system of a network element.

### Background

AQM (Active Queue Management) techniques known in the prior art (e.g., ARED, Codel or PIE) aim to control the queue length below a pre-defined threshold. These AQM techniques aim to control the queue length in network elements below certain threshold so that overload is avoided and that queuing delay could be controlled. These schemes, however, are proved to perform reasonably well ONLY with known network parameters, e.g., number of flows and round-trip-times. In reality, these network parameters change so often that the AQM schemes fail to offer satisfactory performance. With existing AQM schemes, early congestion information is signalled to the sender when the queue length exceeds certain threshold, consequently triggering end-point congestion control. Such an operation is helpful for early congestion recovery, but cannot prevent temporary queue oscillation (due to e.g., new incoming flows, change of sending rates). The fluctuation of the queue will lead to unpredictable jitter and packet delay, which have detrimental impact on the Quality of Experience (QoE) of the applications that have hard requirement on the end-to-end (E2E) delay.

Existing AQM schemes such as RED, CoDel or PIE use packet drops as the congestion feedback signal to the source, which causes unnecessary and undesired quality degradation for real-time applications using unreliable RTP/UDP transmission (e.g., WebRTC). Signaling the congestion information via explicit congestion notification (ECN) is an alternative approach that the AQM enabled routers/switches can take.

In software defined networks (SDN), the current OpenFlow specification (version 1.4) provides limited QoS through a simple queuing mechanism. Multiple queues are supported on the same port, where a minimum bandwidth is allocated to each queue so as to provide a minimum QoS support. Flow entries mapped to a specific queue will be treated according to that queue's configuration. No detailed rules are provided on queue configuration in the current specification. Per-flow packet drop/mark is possible in the OpenFlow configuration.

It is an object of the present invention to improve the existing active queue management systems to minimize jitter and packet delay.

### Summary

To this end, the invention provides a method for triggering a congestion control mechanism of network element, wherein the method comprises the steps of:
- detecting at an end user device a traffic change trigger action;
- retrieving time information and quantum information regarding a traffic change from the traffic change trigger action;
- generating a message comprising at least the time information and the quantum information;
- sending the message to the network element to trigger the congestion control mechanism.

In the present description, the term congestion control mechanism is defined as any mechanism that is used to deal with or to prevent congestion. Therefore congestion control mechanism includes early congestion control such as active queue management that aims to avoid congestion by issuing packet drop or ECN marks. Congestion control mechanism preferably also includes queue/buffer overflow in a first-in-first-out (FIFO) queuing system. Congestion control is defined as any action that can be taken to avoid buffer overflows in the network element or to maintain the buffer size under a pre-defined threshold.AQM schemes were known more than 15 years ago. Yet, it failed to achieve wide deployment due to the unsatisfactory performance it provided under varying network conditions. The present invention enhances the performance of AQM techniques with near future traffic detection, hence, generating bigger gains in controlling the E2E delay. Moreover, it serves as a strong incentive to activate the AQM schemes (that are currently implemented, but disabled) at network routers/switches, and promote the deployment of delay-sensitive applications such as WebRTC and augmented/virtual reality.

The invention is based on the insight that congestion control mechanisms that operate only based on network load measurements, always "run behind the facts". At an end user device, the flow is requested, which request is conventionally sent to the server, which server starts transmitting content to the end user device. Upon receipt of the content at the network element, the network element can detect early congestion, upon which detection the network element can start the congestion control mechanism. By starting the congestion control mechanism, the end user device is typically informed of the congestion, and can adapt for example the flow rate in a further request to the server. This explanation shows that in a conventional system, the congestion control mechanism can only react to new flows at the moment that these new flows arrives at the network element. However, information regarding the new flows is available in the network as from the moment the traffic change trigger action is made at the end user device. The present invention proposes to use this information to directly inform the congestion control mechanism of near future traffic flows, meaning traffic flows that are highly likely to arrive at the network element in the near future, so that congestion control mechanisms such as AQM techniques can already be activated and proactively control congestion. In this manner, queue fluctuations are minimized so that the quality of experience can be improved.

Preferably, the traffic change trigger action is an event at the end user device, from which event a change in that traffic between the end user device and the network element is expectable. The skilled person will understand that at the end user device, multiple actions can be taken that trigger traffic changes. For example, a new traffic can be requested by a user clicking a link. Alternatively, a software element at the end user device is capable of adapting a bit rate for a data flow, thereby also triggering a change in traffic. These trigger actions can be monitored at the end user device, and from these trigger actions, a change in traffic can be reasonably be expected. This expectation is communicated in a message to the network element so that the congestion control mechanism can not only operate based on current network information, but also has information about near future traffic that is likely to arrive at a network element. This allows the network element to operate its congestion control mechanism in a much more efficient way.

Preferably, the traffic change trigger action is one of a software module action and a user action. User actions can be monitored as well as software module actions. Based on these actions, the traffic change can be quantized, and the moment of time wherein the traffic change will arrive at the network element can be calculated or at least predicted. This respectively leads to quantum information and time information regarding the traffic change.

Preferably, the traffic change trigger action is a user behavior action detected via human behavior tracking. Via human behavior tracking it is possible to predict which traffic requests the user will make in the near future. An example which is described in more detail hereunder, is a mouse down event on a link in a browser, which mouse down event is likely to be followed with a mouse click requesting the data traffic. The mouse down event can therefore be considered as a trigger action from which a traffic change can be reasonably be expected. However, the change that traffic will effectively be requested is not 100%. Other human behavior tracking mechanisms can also be implemented, for example case tracking to track the link at which a user is looking. The skilled person will recognize that different sorts of human behavior tracking lead to different traffic changes predictions with different chances of the traffic change being effectively requested by the user. When the traffic change trigger action is a user behavior action detected via human behavior tracking, the congestion control mechanism can be informed on near future traffic even before the traffic has been requested by the user. This gives the congestion control mechanism a larger time frame to control the congestion so that the quality of experience can be further enhanced.

Preferably, the network element comprises a network controlling module which controls the congestion control mechanism based on the combination of traffic quantum measurements in the network element and the message. The traffic quantum measurements show the actual state of the network element, while the message informs the control mechanism on near future traffic. Based on this information, the congestion control mechanism can proactively react on near future traffic flows.

Preferably, the network controlling module computes marking/dropping rates to be applied based on the combination. Applying marking rates is a known technique for early congestion control using active queue management techniques and is therefore suitable for use in the present invention. In case ECN marking is not available, packet drops will be issued as an indication of early congestion detection. Marking/dropping rate adaptations allow network flows to continue at lower or higher rates without missing flow deadlines.

The invention further relates to a module for triggering a congestion control mechanism of a network element, the module comprising:
- at least one detector for detecting at an end user device a traffic change trigger action;
- a retrieving means for retrieving time information and quantum information regarding a traffic change from the traffic change trigger action;
- a message generating means for generating a message comprising at least the time information and the quantum information;
- a communication element adapted to send the message to the network element to trigger the congestion control mechanism.

The module is preferably integrated into a proxy device arranged in a communication network between the end user device and the network element. The module, for example integrated into the proxy, is adapted to gain information on near future traffic at the network element, and is configured to inform the network element of such near future traffic so that the congestion control mechanisms can be triggered. To this end, the module gains information from a detector at the end user device regarding a traffic change trigger action, and sends a message to the network element comprising at least time information and quantum information regarding the traffic change. In this manner, the network element can prepare for the traffic change before the traffic change is effectively felt by the network element.

Preferably, the detector is formed as a plug-in element at the end user device, which plug-in element is adapted to communicate the traffic change trigger action to the retrieving means. Thereby, the retrieving means can also be integrated into the end user device or the retrieving means are integrated into the proxy. In either case, the plug-in element detects the traffic change trigger action from which trigger traffic changes trigger action the quantum information and time information can be retrieved.

The invention further relates to a network element comprising a network controlling module adapted for controlling a congestion control mechanism, based on a combination of traffic quantum measurement in the network element and a message comprising at least time information and quantum information relating to a traffic change retrieved from a traffic change trigger action detected by a detector at an end user device. Such network element is therefore capable of not only avoiding congestion based on traffic measurements in the network element, but also proactively avoid congestion based on messages received which relate to near future traffic.

The invention further relates to a digital storage medium encoding a machine executable program of instructions to perform the method of the invention. The invention further relates to a computer program product comprising computer executable instructions for performing, when the program was run on a computer, the method of the invention.

### Brief description of the figures

Some embodiments of apparatus and/or methods in accordance with embodiments of the present invention are now described, by way of example only, and with reference to the accompanying drawings, in which:
figure 1 illustrates a flow chart of the invention;
figure 2 illustrates a network set-up wherein the invention is applicable;
figure 3 illustrates another network set-up wherein the invention is applicable.

### Detailed description of embodiments

Interactive applications such as WebRTC, on-line gaming and augmented reality are gaining popularity in recent years. Such emerging services are highly sensitive to the E2E (end-to-end) latency, e.g. a maximum round trip delay of 150ms for WebRTC, 50ms for online gamers, or a hard requirement of 7 to 20ms for a smooth experience with augmented reality.

In the prior art, Access Nodes are known to have AQM applications which are early congestion notification (ECN)-capable, as the last-mile latency on access links contributes significantly to E2E latencies, see [S. Sundaresan, W. de Donato, N. Feamster, R. Teixeira, S. Crawford, and A. Pescape. Broadband internet performance: A view from the gateway. In Proc. ACM SIGCOMM, Toronto, Ontario, Aug. 2011.], incorporated by reference for the purpose of explaining AQM applications.

Considering conventional network traffic, user requests a piece of new content at an end user device 7 (omitting the initialization and handshakes for simplicity). In response to the request, the server 6 delivers the requested content to the user 7. Due to insufficient network capacity, the new incoming flow builds up the queue and causes early congestion. The access node 9, consequently, updates the marking/dropping probability based on current network condition, and marks/drops the incoming packets with the newly issued marking/dropping rate. The ECN-responsive receiver 7, upon receiving the ECN-marked packets, sets the ECN-echo flag in the corresponding ACKs sent to the sender 6. Once the ECN messages arrive at the sender 6, end-point congestion control is triggered. If ECN marking is not supported, end-point congestion control is triggered by conventional packet drops. The sender 6 reduces its sending rate so that networking congestion is alleviated. The total time it takes to recover from networking congestion (starting from the request of new content) is: 1.5RTT+a, where *a* is the distance (in time) from the server 6 to the access node 9.

The present invention is based on the insight that without the knowledge of near future flow arrival, transient network congestion is inevitable. The generally termed (early) *congestion recovery* has superior performance in comparison with traditional tail-drop FIFO queues, but still suffers from unpredictable jitter and queue oscillation. The present invention solves improves the early congestion recovery system as will be explained further.

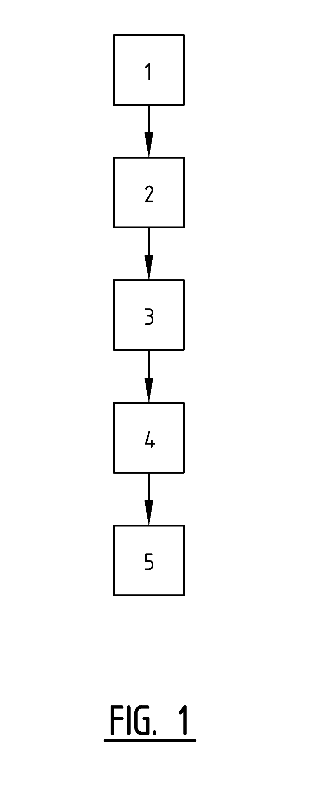

The present invention provides a mechanism as illustrated in fig. 1, that allows to 1) detect an event that is going to change a data flow in the near future; 2) inform a network controlling module that is capable of managing the queue by considering the occurrence of the detected near future data flows. The invention, though being elaborated at the access node (AN), is applicable to any routers/switches where network congestion may occur.

In the flow chart of fig. 1, block 1 relates to the detection of a traffic change trigger action, from which traffic change trigger action a near future traffic flow can be expected. Block 2 relates to retrieving from the traffic change trigger action at least time information and quantum information regarding the traffic change. Thereby, time information is defined as information relating to the moment of arrival of the traffic change at the network element. Quantum information relates to the rate of the flow or size of the packages that are to be expected. Block 3 relates to generating a message comprising at least the time information and the quantum information. Block 4 relates to sending the generated message to the network element, so that the network element is informed of near future traffic. Block 5 relates to congestion control in the network element. Possible actions to be taken are ECN marking or packet droppings, but also redirections of network paths to relieve the network element from a flow, which is possible in software defined networks.

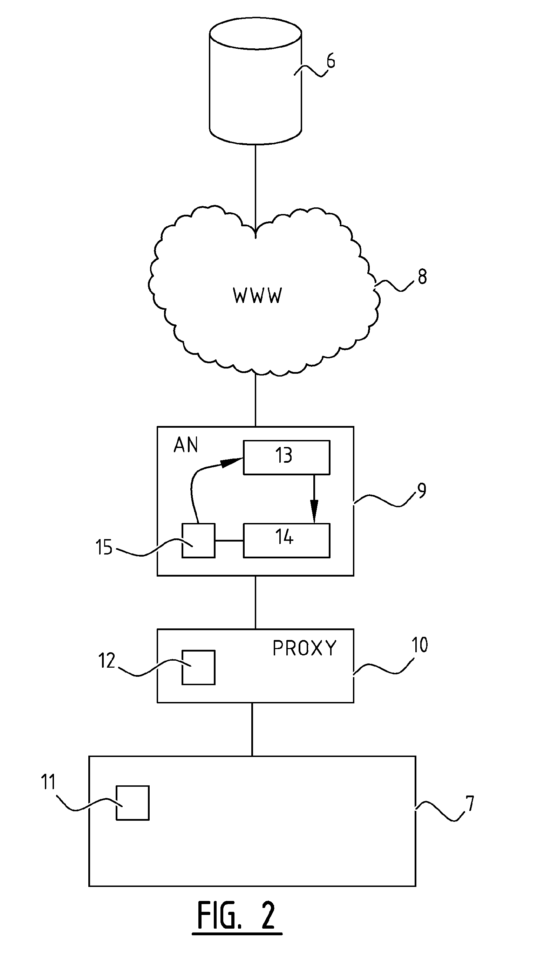

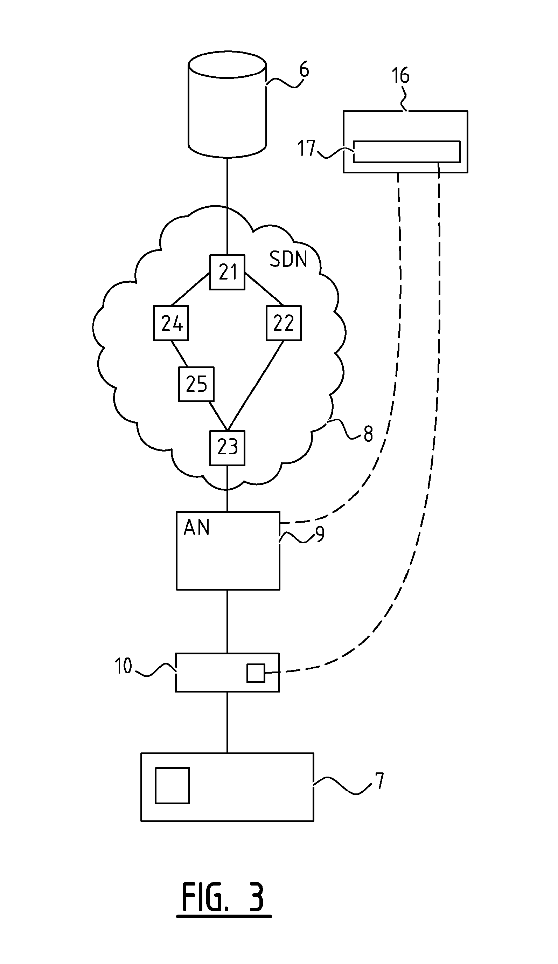

Figures 2 and 3 show some embodiments of network setups in which the invention is applicable. A list of preferred modules/steps introduced in this invention is summarized as follows:
▪ *Event detection:* A plug-in 11 installed at the end-device 7. The plug-in 11 is adapted to detect a traffic change trigger action, for example the likelihood of near future event occurrence via mouse tracking. In this example, when a user presses the mouse on a URL or playback button of a streaming application, to be interpreted as the broad definition of *streaming* to VoD, WebRTC, gaming, etc, the module will preferably first detect whether it is a mousedown event or a mouse drag event. If it is a mousedown event, it is almost certain that it will be followed by a mouseclick event shortly. Nowadays the mouseclick event is typically used to trigger the request of content. Once the mousedown event is detected, an *event detection message* is preferably prepared to inform the network about the traffic change to be expected. As a typical time difference between the mousedown event and the mouseclick event is about 50ms-150ms, the network controlling module will be informed of the near future traffic at least 50ms earlier before a content request is sent out.
▪ *Proxy 10:* An intermediate module 10 positioned somewhere between an end-user device 7 and a network device 9. The proxy 10 communicates with the controlling module 13, 17 residing inside, for example in case of an access node 9, or above, for example in case of SDN, networking devices about the event detection message generated at the end-user device. In case of traffic change, for example a sending rate modification due to application adaptivity, the proxy 10 will inform the networking device 9, 16 about such a change. The proxy may be in the form of an additional module co-located in the residential gateway, or serves as a separate device next to the residential gateway.
▪ *Network controlling*: Based on the event detection message forwarded from the proxy 10, the control plane 13 in a networking device 9 controls the congestion control mechanism 14. In one example, the control plane determines what is the new marking/dropping probability and when to update the new marking/dropping rate.

The proposed low-latency queue management scheme with near future traffic detection according to an embodiment of the present invention is explained in relation Fig. 2.

A preferred embodiment of the method according to the invention is described to show the effects of the invention. In the example, the method comprises 6 steps described hereunder:
**Step 0:** The detector 11, for example in the form of an event detecting module 11, is adapted for detecting a traffic change trigger action, for example by tracking the user behaviour at the end-user device 7, and detects a traffic that is likely to occur, or detects a traffic change that is likely to occur.
**Step 1:** The traffic change trigger action comprises time and quantum information regarding the traffic change (be it a new request for traffic or change of traffic delivery), and is sent to the proxy 10. The proxy 10 retrieves time and quantum information regarding the traffic change for further use in the network. Alternatively, the traffic change trigger action is analysed at the end user device to retrieve the time and quantum information from the trigger action. This time and quantum information can be sent to the proxy for further use.
**Step 2:** The proxy 10 communicates with the in-network controlling plane 13, 17, and notifies it about the event or change that is about to happen. Thereby, the proxy 10 at least provides the controlling plane of time information and quantum information of the traffic change thereby informing the controlling plane respectively when the traffic change is to be expected and what the flow size or flow rate is of the expected traffic.
**Step 3:** The in-network controlling module 13, 17 triggers the congestion control mechanism 14, 16, it for example computes the new marking/dropping rate to be applied based on the near future and current traffic information. The dotted line in figure 3 between the control mechanism 16 and the access node 9 represents the communication between the control panel and the data panel. The near future traffic information is retrieved from the traffic change information received from the proxy, the current traffic information is measured 15 in the network or network element. The controlling module also keeps the RTTs (Round-Trip-Time) of each flow along their paths. Based on the RTT information, the controlling module 13, 17 determines when to update the marking/dropping rate, so that the arrival of the new (or change of) flow will not cause early congestion, and without severely compromise the bandwidth usage.
**Step 4:** The request is forwarded to the content server 6.
**Step 5:** Content delivery flow is started.
**Step 6:** Once the new flow arrives at the access node 9, new early congestion notification ECN marking or packet dropping should be applied. This is because: to prevent early congestion at step 3, the performance of existing flows in the network is compromised by allowing the delivery of the new flow. Now that the new flow has arrived, it should share the bandwidth with the existing flows in a fair way. Many of the networking devices support per-flow marking/dropping, e.g., SDN or per-flow (physical or virtual) queuing. In this case, per-flow marking/dropping rate should be issued for the new arriving flow. The per-flow marking/dropping rate is leveraged in such a way that bandwidth fair-sharing is achieved after one RTT.

In this way, the sender 6 is given sufficient time to (re)schedule the network resource so as to accommodate the arrival of new (or change of) traffic without causing network congestion (hence, prevent queue oscillation).

Figure 3 illustrates a software-defined network (SDN), in which the present invention can be implemented without significant changes to the SDN network, to optimize congestion control mechanisms.

SDN controller 16 resides logically above the network elements representing the aggregation and access.

The controller 16 holds the state of each of the switching elements (21, 22, 23, 24, 25) and each of the valid flows in the relevant section of the network.

Switching elements constitute the data path of the flows forward packets to the predetermined queues of the predetermined output ports according to the matched fields corresponding to packet destination, traffic class and traffic type. The switch typically also gathers statistics on the number of packets/bytes and RTT associated with each of the flows. The switch is also responsible for queue management and possibly per-flow packet marking/dropping.

The controller 16 runs SDN applications 17 which perform following functions:
- Analyzing the statistics gathered from the switch (statistics of packets and bytes per unit interval matching given rules in the switch) thereby gaining information on current network traffic;
- When the invention is implemented in a SDN, the SDN application is further configured for analyzing the near future traffic information, based on which a new marking/dropping rate is issued. The SDN application 17 optimizes queue management, i.e., packet marking/dropping rate, time to update the new rate. It also balances bandwidth fair-sharing between existing and new joining (or changing) flows.

In the shown example of fig. 3, the software defined network can set up of a flow from server 6 to access node 9 via switching elements 21, 22 and 23. Upon reception of the message comprising time information and quantum information relating to near future data traffic, for example received from the proxy 10 by the software application 17, instead of applying a new marking/dropping rate, the software defined network controller 16 can redefine the flow between server 6 and access node 9 via the switching elements 21, 24, 25 and 23 thereby relieving switching element 22 from the flow between the server 6 and access node 9. In this manner, software defined networks allow to optimize network flows based on near future traffic information without adapting traffic rates.

The superiority of integrating the present invention in an existing AQM system can be very clearly seen in an example of a path suffering from long RTT. As described above, it takes an interval of 1.5RTT+a for a normal AQM scheme to start reducing the backlogged queue. Given a long RTT of 300ms, it takes almost half a second for the network to recover from transient congestion.

If the updated marking/dropping rate is issued too early to a flow, link utilization is degraded. If the rate is updated too late, temporary queue oscillation is observed. Therefore, a networking node needs to make judicious decision on when (and how much) to update the new marking/dropping rate. With a wise decision, the half second quality degradation at the end-users can be avoided without compromising the bandwidth utilization.

For instance, the access node is informed at time t₀ that a near future traffic is going to arrive in 160 millisecond. The marking/dropping rate to prevent queue backlogging is calculated as p*. Assuming that it takes an existing flow 40ms to reduce it sending rate and arrives at the access node with the adapted rate. The access node, therefore, prefers to mark the flow (or drop packets of the flow) at t₀+120ms, so that the new flow arriving at t₀+160ms can be scheduled with the collaboration of existing flows. Preferably, flows with heterogeneous *congestion-responsive time* should be marked at different timestamps so as to minimize the impact on bandwidth utilization. The congestion responsive time includes: marking/dropping at the access node AN, arriving at the receiver, flag ECN-echo field in the ACK, receive the ECN-enabled ACK at the sender, sender reduced the sending rate, AN receives the flow with adapted bit-rate.

As HTTP is commonly used to serve web communication, a further embodiment of the invention is described based on HTTP. In many cases, the new traffic is triggered by user's interaction, e.g. a user want to watch a movie on YouTube by clicking on the movie's link. In this case we can use JavaScript to capture the mousedown event when a user presses the mouse on top of an object (content). If the user moves the mouse immediately, a mouse drag event will be fired. And the content will not be requested and nothing will happen.

If the user doesn't move the mouse, it is almost certain that a mouse click event will follow shortly, typically 50ms-150ms later, which requests the content immediately. In this case a new HTTP control message containing the content information (e.g. size, server, etc.) will be created and sent to the Proxy, when the mousedown event is triggered. The Proxy will then terminate the HTTP message and transfer the information (e.g. size, server, etc.) to the network controlling module via e.g., the OpenFlow interface.

Sometimes, the change of network traffic is not triggered by the user interaction. For instance in the HTTP Adaptive Streaming, a client can intelligently change the request of the video quality based on the network traffic. In such case, the traffic change is triggered by a software module. When there is more bandwidth, the software module requests higher quality and vice versa. In such case, it is not possible to detect a traffic change before the traffic request is made, as can be done via human behaviour tracking, so that in such case the network cannot be informed 50ms-150ms earlier of the coming traffic.

However in such case it will still be possible to inform the network a bit earlier before the traffic arrives. When a client decides to upgrade the play back quality of a video content to e.g. quality 7, it will send a HTTP request to the server asking new segments on Q7. Simultaneously, a new HTTP control message containing the same information as aforementioned (e.g. size, server, etc.) can be generated and sent to the Proxy. This information will finally arrive at the network controlling module after the translation from the Proxy. In principle it should arrive one RTT (from Access node to the Server) earlier than the requested traffic, which in fact gives the network controlling module one RTT to prepare for the coming traffic.

In this context it is noted that although in the above-described embodiment a separate new HTTP control message is used to inform the network about the near future traffic, the information in its message body can be carried by an existing HTTP message as well.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for triggering a congestion control mechanism of a network element, wherein the method comprises the steps of:
- detecting at an end-user device a traffic change trigger action;
- retrieving time information and quantum information regarding a traffic change from the traffic change trigger action;
- generating a message comprising at least the time information and the quantum information;
- sending the message to the network element to trigger the congestion control mechanism.

2. Method according to claim 1, wherein the traffic change trigger action is an event at the end-user device, from which event a change in network traffic between the end-user device and the network element is expectable.

3. Method according to claim 1 or 2, wherein the traffic change trigger action is one of a software module action and a user action.

4. Method according to claim 3, wherein the traffic change trigger action is a user behavior action detected via human behavior tracking.

5. Method according to any one of the previous claims, wherein the network element comprises a network controlling module which controls the congestion control mechanism based on a combination of traffic quantum measurements in the network element and said message.

6. Method according to claim 5, wherein the network controlling module computes marking/dropping rates to be applied based on said combination.

7. Module for triggering a congestion control mechanism of a network element, the module comprising:
- at least one detector for detecting at an end-user device a traffic change trigger action;
- a retrieving means for retrieving time information and quantum information regarding a traffic change from the traffic change trigger action;
- a message generating means for generating a message comprising at least the time information and the quantum information;
- a communication element adapted to send the message to the network element to trigger the congestion control mechanism.

8. Module according to claim 6, the module being integrated into a network device arranged in a communication network between the end-user device and the network element.

9. Module according to claim 6 or 7, wherein the detector is formed as a plug-in element at the end-user device, which plug-in element is adapted to communicate said traffic change trigger actions to said retrieving means.

10. Network element comprising a network controlling module adapted for controlling a congestion control mechanism based on a combination of traffic quantum measurements in the network element and a message comprising at least time information and quantum information relating to a traffic change retrieved from a traffic change trigger action detected by a detector at an end-user device.

11. A digital data storage medium encoding a machine-executable program of instructions to perform the method of any one of the claims 1-6.

12. A computer program product comprising computer-executable instructions for performing, when the program is run on a computer, the method of any one of the claims 1-6.

## Amended claims

### Amended claims in accordance with Rule 137(2) EPC.

1. Method for triggering a congestion control mechanism of a network element, wherein the method comprises the steps of:
- detecting (1) at an end-user device a traffic change trigger action;
- retrieving (2) time information and quantum information regarding a traffic change from the traffic change trigger action;
- generating (3) a message comprising at least the time information and the quantum information;
- sending (4) the message to the network element to trigger the congestion control mechanism.

2. Method according to claim 1, wherein the traffic change trigger action is an event at the end-user device, from which event a change in network traffic between the end-user device and the network element is expectable.

3. Method according to claim 1 or 2, wherein the traffic change trigger action is one of a software module action and a user action.

4. Method according to claim 3, wherein the traffic change trigger action is a user behavior action detected via human behavior tracking.

5. Method according to any one of the previous claims, wherein the network element comprises a network controlling module which controls (5) the congestion control mechanism based on a combination of traffic quantum measurements in the network element and said message.

6. Method according to claim 5, wherein the network controlling module computes marking/dropping rates to be applied based on said combination.

7. Module for triggering a congestion control mechanism of a network element, the module comprising:
- at least one detector (11) for detecting at an end-user device (7) a traffic change trigger action;
- a retrieving means for retrieving time information and quantum information regarding a traffic change from the traffic change trigger action;
- a message generating means (10) for generating a message comprising at least the time information and the quantum information;
- a communication element (13) adapted to send the message to the network element to trigger the congestion control mechanism (14).

8. Module according to claim 6, the module being integrated into a network device arranged in a communication network between the end-user device and the network element.

9. Module according to claim 6 or 7, wherein the detector is formed as a plug-in element (11) at the end-user device, which plug-in element is adapted to communicate said traffic change trigger actions to said retrieving means.

10. Network element (9) comprising a network controlling module (13) adapted for controlling a congestion control mechanism (14) based on a combination of traffic quantum measurements in the network element and a message comprising at least time information and quantum information relating to a traffic change retrieved from a traffic change trigger action detected by a detector (11) at an end-user device (7).

11. A digital data storage medium encoding a machine-executable program of instructions to perform all the steps of the method of any one of the claims 1-6.

12. A computer program product comprising computer-executable instructions for performing, when the program is run on a computer, all the steps of the method of any one of the claims 1-6.
